# EUROPEAN PATENT APPLICATION

(11) **EP 3 748 303 A1**
(43) Date of publication of application: **09.12.2020**
(21) Application number: 20175321.7
(22) Date of filing: 19.05.2020
(51) Int. Cl.: G01C 23/00, G08G 5/02, G01S 13/91

(54) **AIRCRAFT, ENHANCED FLIGHT VISION SYSTEM, AND METHOD FOR DISPLAYING AN APPROACHING RUNWAY AREA**

(30) Priority: 03.06.2019 US 201916429824
(71) Applicant: Gulfstream Aerospace Corporation, Savannah, Georgia 31402 (US)
(72) Inventor: HAUSMANN, Jeffrey, Savannah, GEORGIA 31402 (US); TAYLOR, Fred, Savannah, Georgia 31402 (US); MAYO, Amy, Savannah, Georgia 31402 (US); BOHANAN, Scott, Savannah, Georgia 31402 (US); JORDAN, Jim, Savannah, Georgia 31402 (US); SHEA, Kevin, Savannah, Georgia 31402 (US)
(74) Representative: LKGlobal UK Ltd.

(57) **Abstract**

Aircraft, enhanced flight vision systems, and methods for displaying an approaching runway area are provided. In one example, an aircraft includes a display disposed in a cockpit area. A radar imaging and post-processing arrangement is in communication with the display via a processor. The radar imaging and post-processing arrangement is operative to generate a radar image of an approaching runway area, generate a symbology corresponding to the approaching runway area and/or compare the radar image to a synthetic vision (SV) database to align an SV runway area with the radar image to define an aligned SV runway area, and to communicate the symbology and/or the aligned SV runway area to the display.

## Description

### TECHNICAL FIELD

The technical field relates generally to vision systems for an aircraft, and more particularly, relates to an enhanced flight vision system, an aircraft including an enhanced flight vision system, and a method for displaying an approaching runway area using an enhanced flight vision system.

### BACKGROUND

Pilots or other aircraft crew members may use one or more visual systems in lieu of or in addition to natural vision during flight and/or to descend, for example, below a decision height/altitude (DH/DA) or minimum decision altitude (MDA) towards an approaching runway area. A synthetic imaging system such as a Synthetic Vision System (SVS) and/or a real imaging system such an Enhanced Vision System (EVS) may be used to assist pilots or other aircraft crew members during flight and/or landing of the aircraft.

Synthetic Vision System (SVS) imaging considerably enhances the awareness of the situation of the crew by displaying an image of the outside scene that is independent of the meteorological conditions. But the inaccuracies of satellite location and/or the lack of integrity of databases do not allow this system to be adequate for its use during low-altitude flight or landing. As such, the use of SVS imaging is therefore relevant for displaying terrain relatively distant from the aircraft.

An Enhanced Vision System (EVS) is an electronic means for providing an image of the outside scene that is enhanced with respect to natural vision via the use of an imaging sensor, such as an infrared (IR) sensor(s) and/or visual light sensor(s) or camera(s). The pilot therefore has real-time information of the outside. EVS increases visibility at night and in bad weather but, in the latter case, its effectiveness is limited and variable as a function of the types and density of fog and therefore, is used when the aircraft is relatively close to the terrain in relatively non-foggy conditions, for example. As such, during descent towards an approaching runway area in relatively foggy and/or bad weather conditions, pilots or other aircraft crew members unfortunately still need to rely significantly on natural vision on deciding whether visibility of the runway area is suitable for a safe landing.

Accordingly, it is desirable to provide an enhanced flight vision system, an aircraft including an enhanced flight vision system, and a method for displaying an approaching runway area using an enhanced flight vision system that address one or more of the foregoing issues. Furthermore, other desirable features and characteristics of the various embodiments described herein will become apparent from the subsequent detailed description and the appended claims, taken in conjunction with the accompanying drawings and this background.

### SUMMARY

Various non-limiting embodiments of an aircraft, an enhanced flight vision system and a method for displaying an approaching runway area, are provided herein.

In a first non-limiting embodiment, the aircraft includes, but is not limited to, a fuselage. The fuselage supports wings and a tail and has a cockpit area for a crew member. The aircraft further includes, but is not limited to, a display that is disposed in the cockpit area. The aircraft further includes, but is not limited to, a radar imaging and post-processing arrangement that is in communication with the display via a processor. The radar imaging and post-processing arrangement is operative to generate a radar image of an approaching runway area in an airport environment. The radar imaging and post-processing arrangement is further operative to generate a symbology corresponding to the approaching runway area from the radar image and/or compare the radar image to a synthetic vision (SV) airport environment including an SV runway area from an SV database to align the SV airport environment including the SV runway area with the radar image to define an aligned SV runway area. The radar imaging and post-processing arrangement is further operative to communicate the symbology corresponding to the approaching runway area and/or the aligned SV runway area to the display.

In another non-limiting embodiment, the enhanced flight vision system (EFVS) includes, but is not limited to, a display. The enhanced flight vision system further includes, but is not limited to, a radar imaging and post-processing arrangement that is in communication with the display via a processor. The radar imaging and post-processing arrangement is operative to generate a radar image of an approaching runway area in an airport environment. The radar imaging and post-processing arrangement is further operative to generate a symbology corresponding to the approaching runway area from the radar image and/or compare the radar image to a synthetic vision (SV) airport environment including an SV runway area from an SV database to align the SV airport environment including the SV runway area with the radar image to define an aligned SV runway area. The radar imaging and post-processing arrangement is further operative to communicate the symbology corresponding to the approaching runway area and/or the aligned SV runway area to the display.

In another non-limiting embodiment, the method includes, but is not limited to, generating a radar image of the approaching runway area in an airport environment. The method further includes, but is not limited to, generating a symbology corresponding to the approaching runway area from the radar image and/or comparing the radar image to a synthetic vision (SV) airport environment including an SV runway area from an SV database to align the SV airport environment including the SV runway area with the radar image to define an aligned SV runway area. The method further includes, but is not limited to, communicating the symbology corresponding to the approaching runway area and/or the aligned SV runway area to a display.

### BRIEF DESCRIPTION OF THE DRAWINGS

The various embodiments will hereinafter be described in conjunction with the following drawing figures, wherein like numerals denote like elements, and wherein:
FIG. 1 illustrates a perspective side view of an aircraft descending towards an approaching runway area in an airport environment in accordance with an exemplary embodiment;
FIG. 2 illustrates a block diagram including an enhanced flight vision system (EFVS) in accordance with another exemplary embodiment;
FIG. 3A illustrates an infrared (IR) image from an enhanced vision system (EVS) including an approaching runway area in an airport environment during clear weather conditions in accordance with an exemplary embodiment;
FIG. 3B illustrates an infrared (IR) image from an enhanced vision system (EVS) including an approaching runway area in an airport environment during foggy weather conditions in accordance with an exemplary embodiment;
FIG. 4 illustrates a radar image that includes an approaching runway area in an airport environment from a radar imaging and post-processing arrangement in accordance with an exemplary embodiment;
FIG. 5 illustrates a symbology corresponding to an approaching runway area in an airport environment in accordance with an exemplary embodiment;
FIG. 6 illustrates a synthetic vision airport environment including a synthetic vision runway area from a synthetic vision database aligned with a radar image of an approaching runway area in accordance with an exemplary embodiment; and
FIG. 7 illustrates a method for displaying an approaching runway area in accordance with an exemplary embodiment.

### DETAILED DESCRIPTION

The following Detailed Description is merely exemplary in nature and is not intended to limit the various embodiments or the application and uses thereof. Furthermore, there is no intention to be bound by any theory presented in the preceding background or the following detailed description.

Various embodiments contemplated herein relate to an enhanced flight vision system, an aircraft including an enhanced flight vision system, and a method for displaying an approaching runway area using an enhanced flight vision system. In an exemplary embodiment, an aircraft includes a fuselage that supports wings and a tail and has a cockpit area for a pilot and/or other crew member(s). The aircraft includes an enhanced flight vision system that includes a display, a processor, and a radar imaging and post-processing arrangement. The processor is in communication with the display, which is disposed in the cockpit area for viewing by the pilot and/or other crew member(s). The radar imaging and post-processing arrangement is in communication with the processor. The radar imaging and post-processing arrangement is operative to generate a radar image of an approaching runway area in an airport environment. In an exemplary embodiment, the radar imaging and post-processing arrangement includes a radar sensor(s) capable of detecting one or more features of the approaching runway area, such as, for example, the edges of the runway and/or approaching lighting structure, in relatively dense fog and/or bad weather conditions. As such, the radar image will include such features, e.g., the edges of the runway, regardless of fog and other weather conditions.

In an exemplary embodiment, the radar imaging and post-processing arrangement is further operative to generate a symbology corresponding to the approaching runway area based on the radar image and/or to compare the radar image to a synthetic vision (SV) airport environment including an SV runway area to align the SV runway area with the radar image. The SV airport environment is provided from an SV database stored, for example, in the aircraft avionics. In an exemplary embodiment, the symbology corresponding to the approaching runway area and/or the aligned SV runway area is communicated to the processor for communication to the display.

In an exemplary embodiment, advantageously it has been found that by using a radar sensor(s) that is configured to detect one or more features of the approaching runway area in relatively dense fog and/or bad weather conditions, the radar image will include such runway area features, e.g., the edges of the runway, regardless of fog and/or other weather conditions. Further, advantageously by displaying the symbology corresponding to the approaching runway area based on the radar image and/or the aligned SV runway area on the display, the pilot or other aircraft crew member(s) may use the symbology and/or the aligned SV runway area in lieu of or in addition to natural vision during descent, for example, below a decision height/altitude (DH/DA) or minimum decision altitude (MDA) towards the approaching runway area regardless of relatively foggy and/or bad weather conditions.

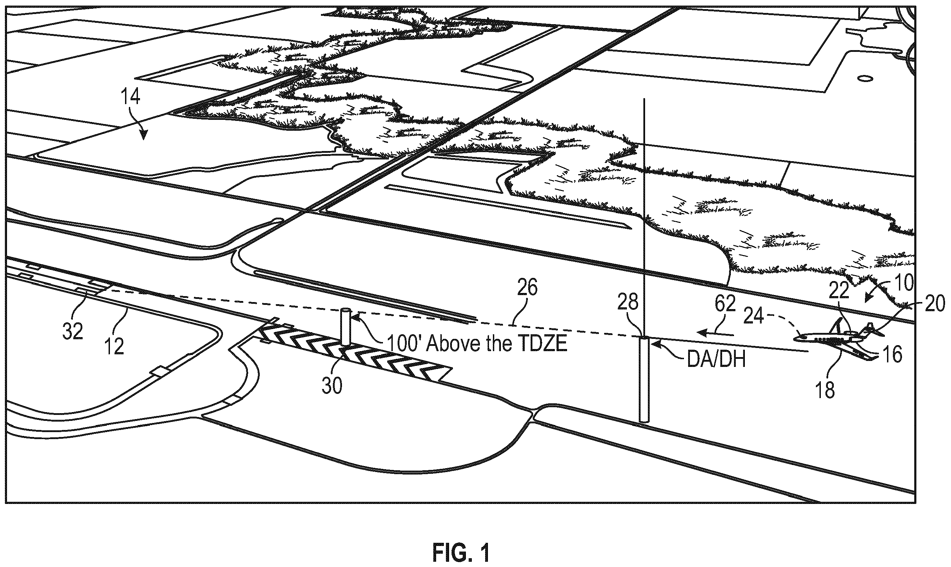

FIG. 1 illustrates a perspective side view of an aircraft 10 descending towards an approaching runway area 12 in an airport environment 14 in accordance with an exemplary embodiment. The aircraft 10 includes a fuselage 16, supporting wings 18, and a tail 20. Depending on the design of the aircraft 10, the engines 22 may be attached to the wings 18, or alternatively, to the fuselage 16. At the forward end of the aircraft 10, the fuselage 16 includes a cockpit area 24 for the pilot and/or other crew members operating the aircraft 10.

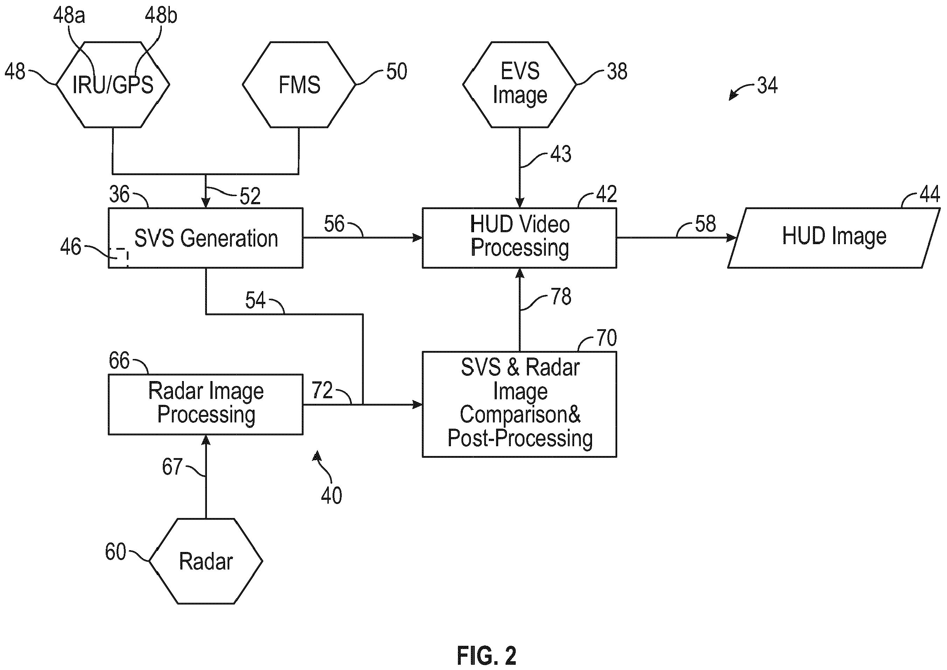

As illustrated, the aircraft 10 is descending along a flight path 26 towards the approaching runway area 12. As the aircraft 10 advances along the flight path 26, the aircraft 10 will pass a decision height/altitude (DH/DA) 28 and over a touchdown zone elevation (TDZE) 30 to touchdown 32 onto the approaching runway area 12 at the end portion of the flight path 26 for landing the aircraft 10. In an exemplary embodiment and referring also to FIG. 2, the aircraft 10 includes an enhanced flight vision system (EFVS) 34 that is configured to be used in lieu of or in addition to natural vision during descent, for example, below the DH/DA 28 towards the approaching runway area 12 regardless of weather conditions including relatively foggy and/or bad weather conditions.

The EFVS 34 is configured to display enhanced images to the pilot and/or other crew members in the cockpit area 24. As illustrated, the EFVS 34 includes a synthetic vision system (SVS) 36, an enhanced vision system (EVS) 38, a radar imaging and post-processing arrangement 40, a processor 42 that is in communication with the SVS 36, the EVS 38, and the radar imaging and post-processing arrangement 40, and a display 44. The display 44 is disposed in the cockpit area 24 and is in communication with the processor 42. Although various block diagram elements shown in FIG. 2 are illustrated as discrete elements, this illustration is for use and explanation, and it should be recognized that certain elements may be combined in one or more physical devices, e.g., one or more microprocessor(s) with associated software.

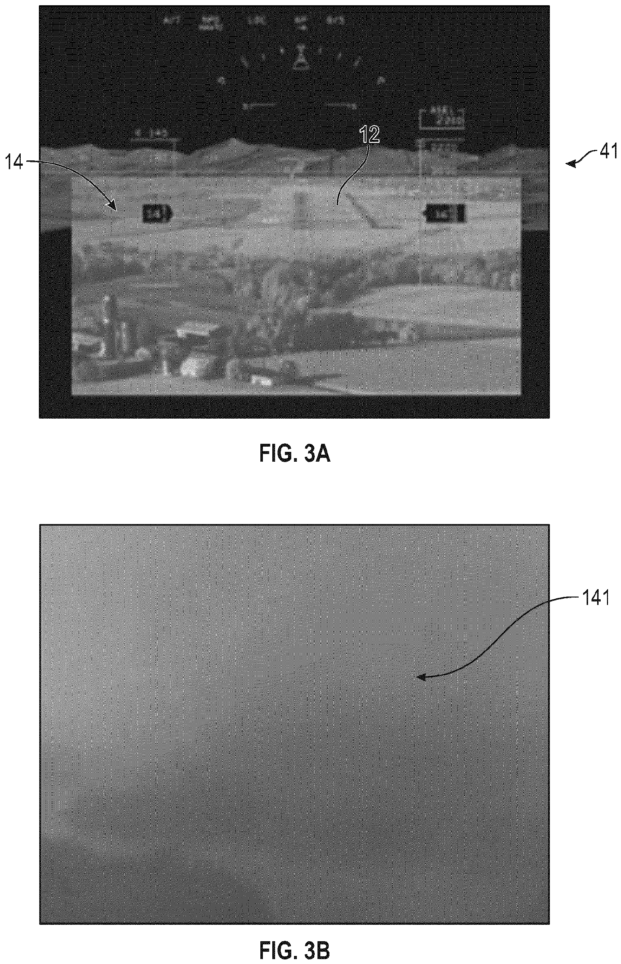

In an exemplary embodiment, the EVS 38 is configured to provide IR images of real-time information of outside the aircraft 10 that is enhanced with respect to natural vision. For example, and as illustrated in FIG. 3A, during the descent and landing phase of the aircraft 10, the EVS 38 provides a real-time IR image of the approaching runway area 12 in the airport environment 14 to the processor 42 via communication path 43 for communication to the display 44 via communication path 58. In an exemplary embodiment, the EVS 38 includes a processor (not shown) that generates an IR image for display on the display 44 based on the output of one or more of the enhanced vision (EV) image sensors, e.g., an infrared (IR) sensor(s) and/or visual light sensor(s) or camera(s). Although the EVS 38 is disclosed as providing IR images, it is to be understood that some newer EVS technologies are configured to provide short and/or long wave IR with a visual camera (e.g., visual image) and thus, the disclosure herein is not limited to just IR images.

The SVS 36 is configured to render an image based on pre-stored database information from a synthetic vision (SV) database 46. The SVS 36 includes a processor (not shown) that communicates with the SV database 46, and further, that communicates with an inertial reference unit (IRU) 48a, a global positioning system (GPS) 48b, and a flight management system (FMS) 50 via communication path 52. The SV database 46 includes data related to, for example, terrain, objects, obstructions, airport environments including corresponding runway areas, and navigation information for output to the display 44 via lines 56 and 58 and the processor 42. The IRU 48a, GPS 48b, and the FMS 50 provide data such as aircraft positioning, heading, attitude, and a flight plan to the SVS 36. As illustrated and will be discussed in further detail below, the IRU 48a, GPS 48b, and the FMS 50 are also indirectly in communication with the radar imaging and post-processing arrangement 40 through the SVS 36 via communication path 54.

As discussed above, the processor 42 is in communication with the SVS 36, EVS 38, and the radar imaging and post-processing arrangement 40. The processor 42 may be a general purpose processor, a content addressable memory, a digital signal processor, an application specific integrated circuit, a field programmable gate array, any suitable programmable logic device, discrete gate or transistor logic, discrete hardware components, or any combination designed to perform the functions described herein. A processor device may be a microprocessor, a controller, a microcontroller, or a state machine. Moreover, a processor device may be implemented as a combination of computing devices, e.g., a combination of a digital signal processor and a microprocessor, a plurality of microprocessors, one or more microprocessors in conjunction with a digital signal processor core, or any other such configuration.

Also, as discussed above, the display 44 is in communication with the processor 42. The display 44 is configured to provide the enhanced images from the EFVS 34 to the pilot and/or other crew members. The display 44 may be any one of numerous known displays suitable for rendering textual, graphic, and/or iconic information in a format viewable by the pilot and/or other crew members. Non-limiting examples of such displays include various flat panel displays such as various types of LCD (liquid crystal display) and TFT (thin film transistor) displays. The display 44 may additionally be implemented as a panel mounted display, a HUD (head-up display) projection, or any one of numerous known technologies. It is additionally noted that the display 44 may be configured as any one of numerous types of aircraft flight deck displays.

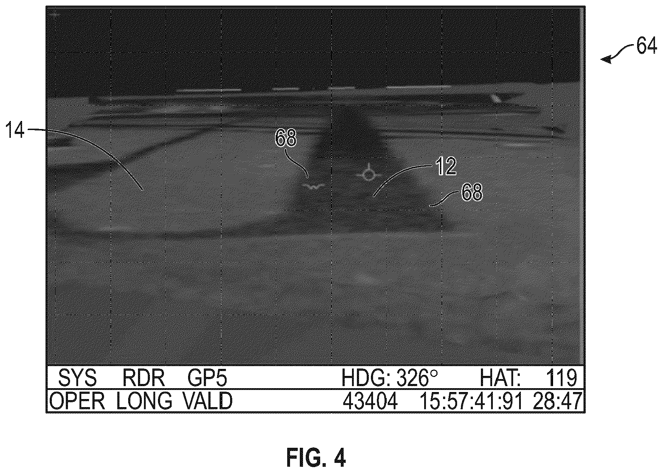

In an exemplary embodiment and with reference to FIGS. 1-2 and 4, the radar imaging and post-processing arrangement 40 is operative to generate radar images that correspond to a forward-looking direction (indicated by single headed arrow 62), such as, for example, a radar image 64 of the approaching runway area 12 in an airport environment 14. In an exemplary embodiment, the radar imaging and post-processing arrangement 40 includes one or more radar sensors 60 that are coupled, mounted to or otherwise disposed on the aircraft 10 facing in the forward-looking direction 62. A radar image processor 66 is in communication with the radar sensor(s) 60 via communication path 67 and generates the radar image 64 based on the output of the radar sensor(s) 60.

In an exemplary embodiment, the one or more radar sensors 60 are configured to detect one or more features of the approaching runway area 12, such as, for example, the edges 68 and/or ends of the runway area 12, in relatively dense fog and/or bad weather conditions. The one or more radar sensors 60 may be active radar sensors, passive radar sensors, or a combination of active and passive radar sensors. Further, the one or more radar sensors may be dedicated solely for generating the radar image 64, or alternatively, may form part of another aircraft system, such as, for example, the aircraft weather radar system. In an exemplary embodiment, the one or more radar sensors 60 operate within the 8 to 100Ghz radar range.

Referring to FIGS. 1-2 and 4-5, the radar imaging and post-processing arrangement 40 further includes post-processing processor 70 that is in communication with the radar image processor 66 via communication path 72 and the SVS 36 via communication path 54. In an exemplary embodiment, the post-processing processor 70 is configured to receive the radar image 64 and to generate a symbology 74 corresponding to the approaching runway area 12 based on the radar image 64. As illustrated, the post-processing processor 70 identifies the runway area features, for example, specifically the runway edges 68 in the radar image 64 of the approaching runway area 12 and generates the symbology 74 corresponding to the runway area features, e.g., specifically lines 76 that correspond to the runway edges 68 in the radar image 64.

In an exemplary embodiment, the symbology 74 corresponding to the radar image 64 is communicated from the post-processing processor 70 to the processor 42 via communication path 78. The processor 42, which is in communication with the EVS 38, is configured to overlay the symbology 74 onto the visual image from the EVS 38. In one example and with reference also to FIG. 3A, the EVS 38 generates the visual image 41 in non-foggy and/or relatively good weather conditions in which the visual image 41 provides a relatively clear details of the approaching runway area 12 and the airport environment 14. In this example, the processor 42 would not necessarily overlay the symbology 74 onto the visual image 41 from the EVS 38 for communication to the display 44 since details of the approaching runway area 12 would be well-defined for aiding the pilot and/or other crew members in landing the aircraft 10 on the approaching runway area 12.

In another example and with reference also to FIG. 3B, the EVS 38 generates the IR image 141 in foggy and/or relatively bad weather conditions in which the IR image 141 provides little or no details of the approaching runway area 12 and the airport environment 14. In this example, the processor 42 overlays the symbology 74 onto the IR image 141 from the EVS 38 for communication to the display 44 since the symbology 74 provides additional details defining the approaching runway area 12 to aid the pilot and/or other crew members in landing the aircraft 10 on the approaching runway area 12.

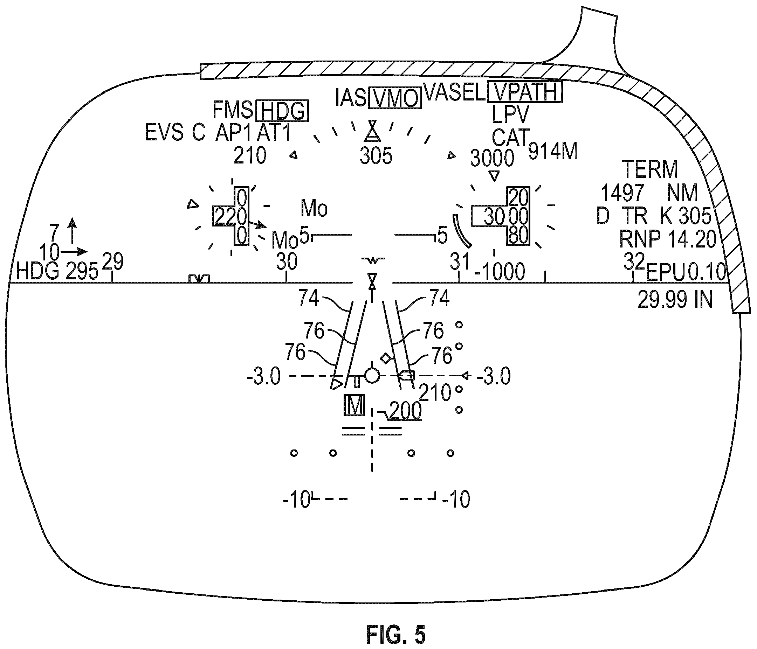

In another exemplary embodiment and with reference to FIGS. 1-2, 4, and 6, instead of or in addition to generating the symbology 74 (also shown in FIG. 5), the radar imaging and post-processing arrangement 40 is operative to compare the radar image 64 to a synthetic vision (SV) airport environment 80 including an SV runway area 82 from the SV database 46 to align the SV airport environment 80 including the SV runway area 82 with the radar image 64, thereby defining an aligned SV runway area 84. In one example, the SVS 36 renders the SV airport environment 80 based on pre-stored database information from the SV database 46 using information from the IRU 48a, GPS 48b, and/or FMS 50, and communicates the SV airport environment 80 to the post-processing processor 70 via communication path 54. The post-processor processor 70 aligns the SV airport environment 80 including the SV runway area 82 with the radar image 64, for example using the symbology 74 and/or optionally information from the IRU 48a, GPS 48b, and/or FMS 50 to align the SV runway area 82 with the approaching runway area 12 including the edges 68 in the radar image 64 to create the SV aligned runway area 84. In this example, the post-processor processor 70 communicates the SV aligned runway area 84 to the processor 42 for communication to the display 44 to provide additional details defining the approaching runway area 12 to aid the pilot and/or other crew members in landing the aircraft 10 on the approaching runway area 12.

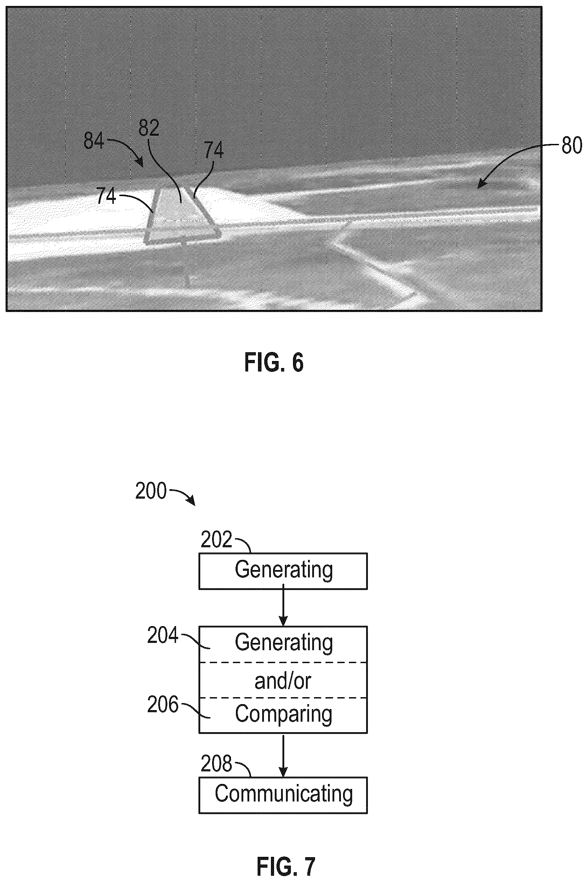

Referring to FIG.7, a method 200 for displaying an approaching runway area in accordance with an exemplary embodiment is provided. The method 200 includes generating (STEP 202) a radar image of the approaching runway area in an airport environment. In one example, the radar image is generated in foggy and/or relatively bad weather conditions, is optionally generated in non-foggy and/or clear weather conditions. A symbology corresponding to the approaching runway area is generated opening (STEP 204) and/or the radar image is compared (STEP 206) to a synthetic vision (SV) airport environment including an SV runway area from an SV database to align the SV airport environment including the SV runway area with the radar image, thereby defining an aligned SV runway area. The symbology corresponding to the approaching runway area and/or the aligned SV runway area is communicated (STEP 208) to a display.

While at least one exemplary embodiment has been presented in the foregoing detailed description of the disclosure, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing an exemplary embodiment of the disclosure. It being understood that various changes may be made in the function and arrangement of elements described in an exemplary embodiment without departing from the scope of the disclosure as set forth in the appended claims.

The present disclosure may also be described with respect to the following aspects:
Aspect 1. An aircraft comprising:
   a fuselage supporting wings and a tail and having a cockpit area for a crew member;
   a display disposed in the cockpit area; and
   a radar imaging and post-processing arrangement in communication with the display via a processor, the radar imaging and post-processing arrangement operative to:
      generate a radar image of an approaching runway area in an airport environment;
      at least one of generate a symbology corresponding to the approaching runway area from the radar image and compare the radar image to a synthetic vision (SV) airport environment including an SV runway area from an SV database to align the SV airport environment including the SV runway area with the radar image to define an aligned SV runway area; and
      communicate the at least one of the symbology corresponding to the approaching runway area and the aligned SV runway area to the display.
Aspect 2. The aircraft of Aspect 1, further comprising an enhanced vision system configured to provide an IR image of the approaching runway area in the airport environment, wherein the enhanced vision system is in communication with the processor for communicating the visual image to the display.
Aspect 3. The aircraft of Aspect 2, wherein the radar imaging and post-processing arrangement is operative to generate the symbology corresponding to the approaching runway area, and wherein the processor is configured to overlay the symbology on the visual image from the enhanced vision system for communication to the display.
Aspect 4. The aircraft of any one of Aspects 1 to 3, wherein the radar imaging and post-processing arrangement is operative to identify runway area features including at least one of runway edges and approaching lighting structure in the radar image of the approaching runway area.
Aspect 5. The aircraft of Aspect 4, wherein the radar imaging and post-processing arrangement is operative to generate the symbology including lines that correspond to the runway edges in the radar image of the approaching runway area.
Aspect 6. The aircraft of Aspects 4 or 5, further comprising an inertial reference unit (IRU), a global positioning system (GPS), and a flight management system (FMS) that are in communication with the radar imaging and post-processing arrangement, and wherein the radar imaging and post-processing arrangement is operative to use information from at least one of the IRU, GPS, and FMS to identify the runway area features including the runway edges.
Aspect 7. The aircraft of Aspect 6, further comprising synthetic vision system (SVS) in communication with the IRU, GPS, FMS and the radar imaging and post-processing arrangement, and wherein the SVS includes the SV database and the radar imaging and post-processing arrangement is operative to:
   align the SV airport environment including the SV runway area from the SV database with the radar image; and
   to communicate the aligned SV runway area to the processor for communication to the display.
Aspect 8. The aircraft of any one of Aspects 1 to 7, wherein the radar imaging and post-processing arrangement includes at least one radar sensor that is disposed on the aircraft facing a forward-looking direction.
Aspect 9. The aircraft of Aspect 8, wherein the at least one radar sensor includes an active radar sensor.
Aspect 10. The aircraft of Aspects 8 or 9, wherein the at least one radar sensor includes a passive radar sensor.
Aspect 11. The aircraft of Aspects 8-10, wherein the at least one radar sensor is part of an aircraft weather radar system.
Aspect 12. The aircraft of Aspect 9-11, wherein the at least one radar sensor is configured to operate in a radar range of from about 8 to about 100Ghz.
Aspect 13. An enhanced flight vision system (EFVS) for an aircraft, the enhanced flight vision system comprising:
   a display;
   a radar imaging and post-processing arrangement in communication with the display via a processor, the radar imaging and post-processing arrangement operative to:
   generate a radar image of an approaching runway area in an airport environment;
   at least one of generate a symbology corresponding to the approaching runway area from the radar image and compare the radar image to a synthetic vision (SV) airport environment including an SV runway area from an SV database to align the SV airport environment including the SV runway area with the radar image to define an aligned SV runway area; and
   communicate the at least one of the symbology corresponding to the approaching runway area and the aligned SV runway area to the display.
Aspect 14. The enhanced flight vision system of Aspect 13, further comprising an enhanced vision system configured to provide a visual image of the approaching runway area in the airport environment, wherein the enhanced vision system is in communication with the processor for communicating the visual image to the display.
Aspect 15. The enhanced flight vision system of Aspect 14, wherein the radar imaging and post-processing arrangement is operative to identify runway area features including at least one of runway edges and approaching lighting structure in the radar image of the approaching runway area, wherein the enhanced flight vision system further comprises an inertial reference unit (IRU), a global positioning system (GPS), and a flight management system (FMS) that are in communication with the radar imaging and post-processing arrangement, and wherein the radar imaging and post-processing arrangement is operative to use information from at least one of the IRU, GPS, and FMS to identify the runway area features including the runway edges.
Aspect 16. The enhanced flight vision system of Aspect 15, further comprising a synthetic vision system (SVS) in communication with the IRU, GPS, FMS and the radar imaging and post-processing arrangement, and wherein the SVS includes the SV database and the radar imaging and post-processing arrangement is operative to use the SV database to identify the runway area features including the runway edges.
Aspect 17. A method for displaying an approaching runway area to a crew member of an aircraft, the method comprising the steps of:
   generating a radar image of the approaching runway area in an airport environment;
   at least one of generating a symbology corresponding to the approaching runway area from the radar image and comparing the radar image to a synthetic vision (SV) airport environment including an SV runway area from an SV database to align the SV airport environment including the SV runway area with the radar image to define an aligned SV runway area; and
   communicating the at least one of the symbology corresponding to the approaching runway area and the aligned SV runway area to a display.
Aspect 18. The method of Aspect 17, wherein communicating further comprises communicating a visual image of the approaching runway area in the airport environment from an enhanced vision system to a processor for communication to the display.
Aspect 19. The method of Aspect 18, wherein the method optionally further comprises overlaying the symbology on the visual image from the enhanced vision system for communication to the display.
Aspect 20. The method of Aspects 17-19, wherein the at least one of generating and comparing further comprises identifying runway area features including at least one of runway edges and approaching lighting structure in the radar image of the approaching runway area.

## Claims

1. An aircraft comprising:
a fuselage supporting wings and a tail and having a cockpit area for a crew member;
a display disposed in the cockpit area; and
a radar imaging and post-processing arrangement in communication with the display via a processor, the radar imaging and post-processing arrangement operative to:
generate a radar image of an approaching runway area in an airport environment;
at least one of generate a symbology corresponding to the approaching runway area from the radar image and compare the radar image to a synthetic vision (SV) airport environment including an SV runway area from an SV database to align the SV airport environment including the SV runway area with the radar image to define an aligned SV runway area; and
communicate the at least one of the symbology corresponding to the approaching runway area and the aligned SV runway area to the display.

2. The aircraft of claim 1, further comprising an enhanced vision system configured to provide an IR image of the approaching runway area in the airport environment, wherein the enhanced vision system is in communication with the processor for communicating the visual image to the display.

3. The aircraft of claim 2, wherein the radar imaging and post-processing arrangement is operative to generate the symbology corresponding to the approaching runway area, and wherein the processor is configured to overlay the symbology on the visual image from the enhanced vision system for communication to the display.

4. The aircraft of any one of claims 1 to 3, wherein the radar imaging and post-processing arrangement is operative to identify runway area features including at least one of runway edges and approaching lighting structure in the radar image of the approaching runway area.

5. The aircraft of claim 4, wherein the radar imaging and post-processing arrangement is operative to generate the symbology including lines that correspond to the runway edges in the radar image of the approaching runway area.

6. The aircraft of claims 4 or 5, further comprising an inertial reference unit (IRU), a global positioning system (GPS), and a flight management system (FMS) that are in communication with the radar imaging and post-processing arrangement, and wherein the radar imaging and post-processing arrangement is operative to use information from at least one of the IRU, GPS, and FMS to identify the runway area features including the runway edges.

7. The aircraft of claim 6, further comprising synthetic vision system (SVS) in communication with the IRU, GPS, FMS and the radar imaging and post-processing arrangement, and wherein the SVS includes the SV database and the radar imaging and post-processing arrangement is operative to:
align the SV airport environment including the SV runway area from the SV database with the radar image; and
to communicate the aligned SV runway area to the processor for communication to the display.

8. The aircraft of any one of claims 1 to 7, wherein the radar imaging and post-processing arrangement includes at least one radar sensor that is disposed on the aircraft facing a forward-looking direction.

9. The aircraft of claim 8, wherein the at least one radar sensor includes an active radar sensor; and/or
wherein the at least one radar sensor includes a passive radar sensor; and/or wherein the at least one radar sensor is part of an aircraft weather radar system; and/or
wherein the at least one radar sensor is configured to operate in a radar range of from about 8 to about 100Ghz.

10. An enhanced flight vision system (EFVS) for an aircraft, the enhanced flight vision system comprising:
a display;
a radar imaging and post-processing arrangement in communication with the display via a processor, the radar imaging and post-processing arrangement operative to:
generate a radar image of an approaching runway area in an airport environment;
at least one of generate a symbology corresponding to the approaching runway area from the radar image and compare the radar image to a synthetic vision (SV) airport environment including an SV runway area from an SV database to align the SV airport environment including the SV runway area with the radar image to define an aligned SV runway area; and
communicate the at least one of the symbology corresponding to the approaching runway area and the aligned SV runway area to the display.

11. The enhanced flight vision system of claim 10, further comprising an enhanced vision system configured to provide a visual image of the approaching runway area in the airport environment, wherein the enhanced vision system is in communication with the processor for communicating the visual image to the display.

12. The enhanced flight vision system of claim 11, wherein the radar imaging and post-processing arrangement is operative to identify runway area features including at least one of runway edges and approaching lighting structure in the radar image of the approaching runway area, wherein the enhanced flight vision system further comprises an inertial reference unit (IRU), a global positioning system (GPS), and a flight management system (FMS) that are in communication with the radar imaging and post-processing arrangement, and wherein the radar imaging and post-processing arrangement is operative to use information from at least one of the IRU, GPS, and FMS to identify the runway area features including the runway edges.

13. The enhanced flight vision system of claim 12, further comprising a synthetic vision system (SVS) in communication with the IRU, GPS, FMS and the radar imaging and post-processing arrangement, and wherein the SVS includes the SV database and the radar imaging and post-processing arrangement is operative to use the SV database to identify the runway area features including the runway edges.

14. A method for displaying an approaching runway area to a crew member of an aircraft, the method comprising the steps of:
generating a radar image of the approaching runway area in an airport environment;
at least one of generating a symbology corresponding to the approaching runway area from the radar image and comparing the radar image to a synthetic vision (SV) airport environment including an SV runway area from an SV database to align the SV airport environment including the SV runway area with the radar image to define an aligned SV runway area; and
communicating the at least one of the symbology corresponding to the approaching runway area and the aligned SV runway area to a display.

15. The method of claim 14, wherein communicating further comprises communicating a visual image of the approaching runway area in the airport environment from an enhanced vision system to a processor for communication to the display, and optionally further comprises overlaying the symbology on the visual image from the enhanced vision system for communication to the display.
